# EUROPÄISCHE PATENTSCHRIFT

(11) **EP 0 914 911 B1**
(45) Veröffentlichungstag und Bekanntmachung des Hinweises auf die Patenterteilung: **22.04.2009**
(21) Anmeldenummer: 98120793.9
(22) Anmeldetag: 03.11.1998
(51) Int. Cl.: B25J 19/00

(54) **Roboterarm mit Gewichtsausgleich**
Balancing device for robot arm
Dispositif d'équilibrage pour bras de robot

(30) Priorität: 05.11.1997 DE 19748822
(43) Veröffentlichungstag der Anmeldung: 12.05.1999
(73) Patentinhaber: KUKA Roboter GmbH, 86165 Augsburg (DE)
(72) Erfinder: Aschenbrenner, Alexei, 86156 Augsburg (DE); Settele, Norbert, 86574 Petersdorf-Wilprechtszell (DE); Sedlmair, Norbert, 86179 Augsburg (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 3 543 492
- US-A- 5 767 648
- PATENT ABSTRACTS OF JAPAN vol. 1996, no. 08, 30. August 1996 (1996-08-30) & JP 08 090484 A (FANUC LTD), 9. April 1996 (1996-04-09)
- PATENT ABSTRACTS OF JAPAN vol. 013, no. 432 (M-874), 27. September 1989 (1989-09-27) & JP 01 164580 A (FUJITSU LTD), 28. Juni 1989 (1989-06-28)
- PATENT ABSTRACTS OF JAPAN vol. 1998, no. 06, 30. April 1998 (1998-04-30) & JP 10 044071 A (FANUC LTD), 17. Februar 1998 (1998-02-17)

## Beschreibung

Die vorliegende Erfindung betrifft einen Roboter mit mindestens einem um eine Schwenkachse schwenkbaren Roboterarm und mit einen das Drehmoment des Roboterarmes um diese Schwenkachse kompensierenden Drehmomentkompensierer.

Typische Roboter, wie sie etwa in der Autoindustrie zum Schweißen von Karosserien Anwendung finden, weisen üblicherweise verschwenkbare Arme auf. Eine derartige Anordnung ist in der Regel nicht lagestabil. Es müssen daher Maßnahmen getroffen werden, damit ein solcher Arm nicht um die Schwenkachse nach unten kippt. Es sind verschiedene Ansätze bekannt, um dies zu verhindern.

So können Bremsen vorgesehen werden, die ein derartiges Kippen verhindern. Ein Beispiel für eine Bremse, die an einem angetriebenen Gelenk mit Rotationsfreiheitsgrad vorgesehen ist, ist aus der EP 93889 A1 bekannt. Bei der vorbekannten Anordnung ist auf einem Bremssolenoid ein Zahnkranz angeordnet, der mit einem auf dem Rotor des elektromotorischen Antrieb vorhandenen Zahnkranz in Eingriff gebracht werden kann, was ein Drehen des Gelenkes verhindert.

Es ist aber sowohl zu Wartungszwecken als auch beim Anfahren des Roboters aus der ausbalancierten Ruhestellung erwünscht und erforderlich, eine stabile Neutralstellung bei geöffneten Bremsen ohne Kippgefahr zu gewährleisten, so dass weitere bauliche Maßnahmen zur Drehmomentkompensation erforderlich sind.

Im Stand der Technik werden etwa Ausgleichsgewichte eingesetzt, die direkt oder indirekt über ein Gestänge auf die Schwenkachse einwirken. Diese Anordnung ist zwar bis auf gegebenenfalls erforderliche Kontrollen des Gestänges weitgehend wartungsfrei, erhöht aber die Trägheitsmomente des Armes, was einen höheren konstruktiven und finanziellen Aufwand für den Antrieb bedingt.

Bekannte mechanische Federelemente sind zwar wartungsfrei, benötigen jedoch ein großes Bauvolumen und erlauben keine auslenkungsabhängige oder sonst vorgebbare Kompensation.

Es ist auch bekannt, zur Drehmomentkompensation hydraulische oder pneumatische Zylinder-Kolben-Anordnungen einzusetzen. Ein Ende der Zylinder-Kolben-Anordnung ist exzentrisch an einem mit der Schwenk-Achse mitgedrehten Teil angelenkt, während das gegenüberliegende Ende an einem festen Basisteil des Roboterarmes angelenkt ist. Durch Druckausübung auf den Kolben können von der Basis auf den Exzenter Kräfte ausgeübt werden, die den Arm am Kippen hindern. Derartige Zylinder-Kolben-Anordnungen können zwar auch bei geringem Bauvolumen die zur Kippsicherung erforderlichen Kräfte aufbringen. Durch Regelung des Druckes im Zylinder sind diese Kräfte auch einstellbar. Zylinder-Kolben-Anordnungen sind jedoch wartungsintensiv und somit teuer im Unterhalt. Hinzu treten bei Pneumatik-Zylindern das Erfordernis nach einem separaten Luftanschluss und bei Hydraulik-Zylindern Probleme mit Leckagen.

Aus der JP 8-090484 ist eine magnetische Drehmomentkompensation bekannt, die in vollständiger Analogie zu einer Schraubenfederanordnung oder einer Zylinder-Kolben-Anordnung ausgebildet ist. Hierzu ist am Ende eines äußeren Hohlzylinders ein scheibenförmiger Magnet angeordnet, durch den ein Kolben tritt, an dessen im Zylinder befindlichen Ende ein zweiter scheibeförmiger Magnet dergestalt angeordnet ist, dass gleichnamige Magnetpole der beiden Scheibenmagneten einander zugewandt sind. Dies führt zu einer zu Kompensationszwecken nutzbaren rücktreibenden Kraft aufgrund magnetischer abstoßbaren rücktreibenden Kraft aufgrund magnetischer Abstoßung, wenn die Scheibenmagnet durch eine von außen auf den Kolben einwirkenden Kraft einander angenähert werden.

Eine weitere Möglichkeit besteht darin, das erforderliche Gegen-Drehmoment mittels des Antriebs-Motors vorzusehen, der den Roboterarm um die Schwenkachse bewegt. Dies ist jedoch allenfalls dann praktikabel, wenn nur kleine Kräfte aufgebracht werden müssen, da andernfalls ein deutlich erhöhter Mehraufwand bei Motor, Getriebe und den zugeordneten Servoverstärkern erforderlich ist.

Die JP 11 64580 zeigt eine Tragstruktur eines Roboters des Kartesischen Typs. Dabei ist ein Werkzeug in einer Halterung vertikal verfahrbar, die wiederum horizontal entlang eines horizontal auskragenden Armes verfahrbar ist, der senkrecht hierzu entlang einer ebenfalls horizontal gerichteten Schiene verfahrbar ist. Um das Biegemoment des horizontal auskragenden Armes je nach Position der Werkzeughalterung zu kompensieren ist am freien Ende des auskragenden Armes ein Stab mit einem Magnet angeordnet, auf den ein Elektromagnet zur Ebene der Kombination des Biegemoments wird.

Die Aufgabe der Erfindung besteht darin, unter Vermeidung der oben genannten Nachteile eine verbesserte Drehmomentkompensation zu gewährleisten, die insbesondere baulich konstruktiv einfacher ist und die allenfalls geringe Wartung benötigt.

Zur Lösung der Aufgabe sieht die Erfindung einen Roboter mit den Merkmalen des Anspruchs 1 vor. Die Aufgabe wird auch durch eine Roboter-Drehmomentkompensationseinheit nach dem Anspruch 16 gelöst.

Kompensation beinhaltet einen Ausgleich einer einwirkenden Kraft, wie insbesondere der Gravitationskraft auf einen Roboterarm, entgegen dieser Kraft, und zwar immer unabhängig von Bewegung und Stillstand, insbesondere bei geregeltem Betrieb, wobei die Kompensation üblicherweise in eine Richtung wirkt. Kompensation ist damit von einem Bremsen, d.h. einem Aktivieren einer Bremse zur Veränderung des Bewegungszustandes, zu unterscheiden.

Das Grundprinzip der Erfindung besteht also darin, zur Kompensation von Kräften bzw. Drehmomenten ein elektromagnetisch, wirkendes Kraftelement vorzusehen, das vom Antrieb des Roboterarms getrennt ist und eine der Auslenkung des Arms aus einer Neutralstellung im wesentlichen proportionale Kompensation bewirkt. Anders als bei der Drehmomentkompensation durch Elektromotoren, die unter Verwendung magnetischer Drehfelder wirken, erfordert die vom Antrieb unabhängige, separate elektromagnetische Kippkompensation keinen hohen baulichen Aufwand an teuren Antriebsaggregaten. Die Kompensation des Kippmomentes muss nicht exakt sein; vielmehr können die durch das Armgewicht hervorgerufenen Kippmomente auch über- oder insbesondere bei Auslenkung in eine Arbeitsstellung vorzugsweise allenfalls geringfügig unterkompensiert sein.

Vorteilhaft ist die Ausbildung, worin die magnetische Kompensationseinheit eine Magnetanordnung aufweist, die mit magnetfelddurchdrungenem Spalt und einem darin beweglichen Anker gebildet ist, da in einem Spalt bei gegebener Magnetstärke besonders hohe Feldkräfte auf den Anker wirken. Der Spalt kann zwischen Polschuhen gebildet sein, was an die Formgebung der Magneten selbst verringerte Anforderungen stellt und der Anker ist vorteilhaft aus magnetisch gut leitfähigem Material, etwa weichmagnetischem Material mit insbesondere hoher Permeabilität gebildet. Bei einer solchen Anordnung wird der Anker in eine Stellung streben, in welcher der magnetische Fluss maximiert wird, d.h. der Anker den grösstmöglichen Teil des felderfüllten Raumes einnimmt .

Die Magnetanordnung selbst kann mehrere Einzelelektromagnet-Module umfassen, die gemeinsam einen Elektromagneten bilden. Bei entsprechender Auslegung der Einzelmodul-Magnetstärke und der räumlichen Ausdehnung der Module kann dadurch eine vorgegebene Feldverteilung entsprechend einem gewünschten Verlauf der Kompensation in Abhängigkeit von der Drehstellung des Roboterarmes erzielt bzw. angenähert werden.

Elektromagneten erlauben vorteilhaft auf unterschiedliche Weise, den Kraftverlauf, d.h. den Verlauf der Kompensation insbesondere in Abhängigkeit von der Drehstellung des Roboterarmes, zu beeinflussen. So kann durch eine über die Ausdehnung des Elektromagneten variierende Windungsdichte und die daraus resultierende entsprechende räumliche Variation des von der Spule erzeugten magnetischen Feldes die gewünschte Kompensationscharakteristik erzielt oder zumindest angenähert werden. Weiter ist es möglich, den Elektromagneten mit mehreren, voneinander unabhängigen Wicklungen vorzusehen, die jeweils mit unterschiedlichen Strömen erregt werden; diese bevorzugte Ausgestaltung führt dazu, dass trotz baulich gleicher Ausgestaltung der einzelnen Wicklungsabschnitte eine vorgegebene Drehmomentcharakteristik zu erzielen ist. In diesem Fall können ohne weiteres mehrere Konstantstromspeisungen, z.B. eine pro Wicklung, vorgesehen werden. Alternativ oder ergänzend ist nach der Erfindung für die Elektromagneten eine Erregerstrom-Steuerung vorgesehen, welche den Erregerstrom in Abhängigkeit von wenigstens einer aus Achsstellung, Nutzlast und Armdimensionierung ausgewählten Größe vorsieht. Aus diesen Größen kann beispielsweise mittels eines Prozessrechners oder dergleichen der für eine gewünschte Drehmomentcharakteristik jeweils erforderliche Erregungsstrom ohne weiteres berechnet werden. Der Einsatz einer derartigen Stromsteuerung, die den Strom-Ausgang in Abhängigkeit der genannten Größen errechnet, erlaubt auch eine besonders einfache Änderung der Kippmoment-Kompensationscharakteristik bei Umrüstung des Roboterarmes.

Wenn neben Elektromagneten auch Permanentmagneten verwendet werden, kann durch die Permanentmagneten eine netzunabhängige Drehmomentkompensation für eine sichere Ruhestellung vorgesehen werden, während mittels der Elektromagneten die gewünschte Kompensationscharakteristik bei Auslenkung des Roboterarmes erzielt wird.

In einer bevorzugten Ausführungsform wird bei einem erfindungsgemäßen Roboterarm der Abstand zwischen Anker und Spaltwandung im Vergleich zur Spaltbreite klein dimensioniert, und zumindest einer von Anker und Spaltwandung reibungsvermindernd ausgestaltet. Eine geringe Spaltbreite ist im Hinblick auf die Kraft zwischen Anker und Magnetanordnung und somit auf die maximal erzielbaren Kompensationsdrehmomente vorteilhaft. Dennoch muss auch bei sehr enger Auslegung insbesondere dann kein Verschleiß durch Reibung zwischen Anker und Spalt bzw. keine zusätzliche erhebliche Belastung des Roboterarm-Antriebs befürchtet werden, wenn wenigstens einer von Anker und diesem zugewandter Spaltwand reibungsvermindernd ausgestaltet ist. Zur Reibungsverminderung können Gleitschichten oder auf Anker bzw. Spaltwand angebrachte Kugel- oder Walzlager vorgesehen werden.

Schutz wird auch begehrt für die erfindungsgemäße Kompensationseinheit als solche.

Die Erfindung wird im folgenden nur beispielsweise anhand der Zeichnung beschrieben. In dieser zeigt:
- Fig. 1: einen Roboter mit erfindungsgemäßer elektromagnetischer Kompensationseinheit, teilweise im Schnitt;
- Fig. 2a, 2b: zwei unterschiedliche Ausgestaltungen einer planaren Magnetanordnung mit Elektromagneten;
- Fig. 3: eine zylindrische Magnetanordnungen mit Elektromagneten, teilweise in Schnittansicht;
- Fig. 4: eine schematische Ansicht einer Stromsteuerung für die Kompensationseinheit.

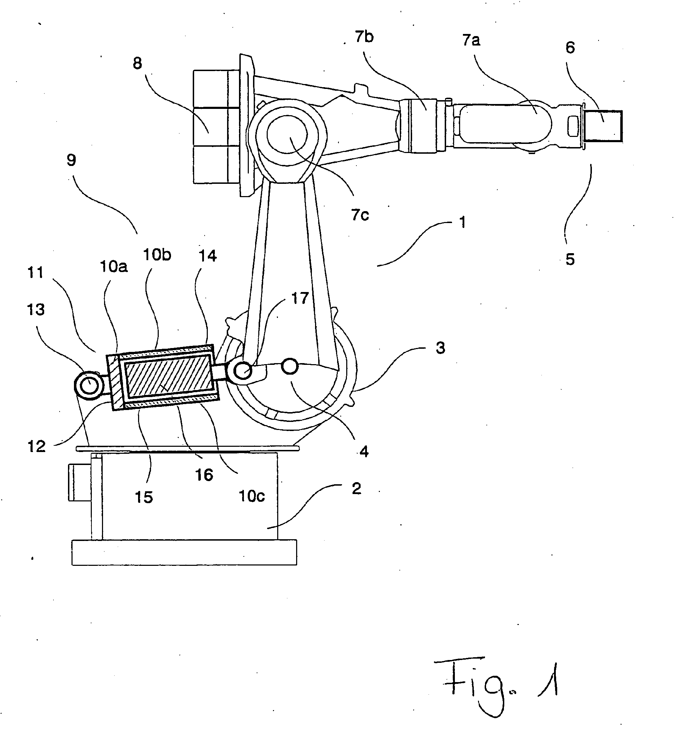

Fig. 1 zeigt einen Roboterarm 1, der von einer Basis 2 aufragt, an welcher er zusammen mit einem Rad 3 um eine horizontal verlaufende Welle 4 schwenkbar befestigt ist. Am distalen Ende 5 des Roboterarmes 1 ist ein Werkzeug 6 angeordnet, welches über Gelenke 7a, 7b, 7c, denen zum Teil Gegengewichte 8 zum Ausbalancieren zugeordnet sind, in verschiedenen Freiheitsgraden durch Motorkraft beweglich ist.

An dem aufragenden Arm 1 ist eine magnetische Kippmoment-Kompensationseinheit 9 vorgesehen, die ein Kippen des Armes 1 um die Welle 4 in die Horizontale verhindert. Die Kipp- bzw. Drehmoment-Kompensationseinheit 9 umfasst eine Magnetanordnung 10, welche an ihrem vom Arm 1 abgewandten Ende 11 einen Abschluss 12 aufweist. Der Abschluss 12 ist vermittels eines Gelenkzapfens 13 an der Basis 2 angelenkt und trägt einen starken Permanentmagneten 10a aus Ferrit oder einer Magnetlegierung mit Seltene-Erde-Elementen.

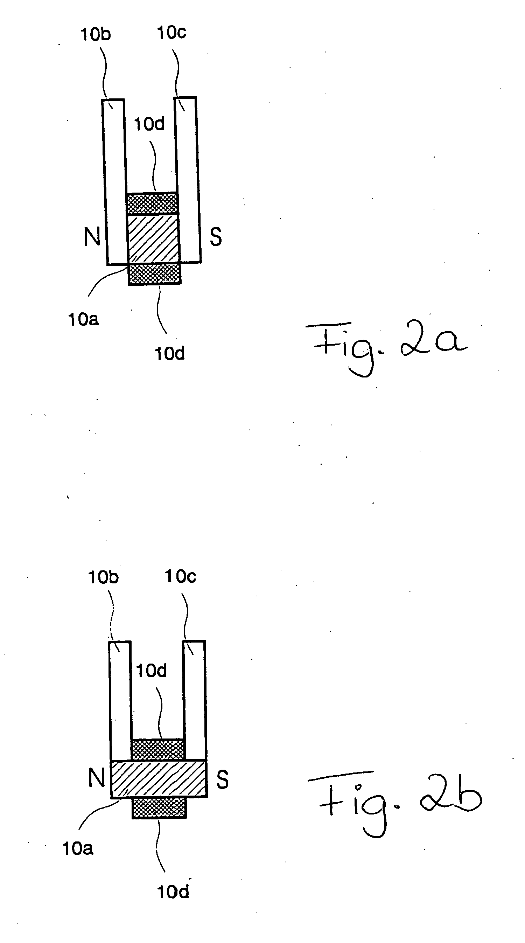

Um den Permanentmagneten 10a herum ist eine elektrisch erregbare Magnetspule 10d vorgesehen, wie aus den Figuren 2a, 2b ersichtlich ist.

Auf den Polen des Permanentmagneten 10a sitzen jeweilige Polschuhe 10b und 10c. Die zur Magnetanordnung 10 gehörigen Polschuhe 10b und 10c sind auf ihren einander zugewandten Innenseiten zumindest im wesentlichen eben gebildet und unter Belassung eines Spaltes 14 zumindest im wesentlichen parallel zueinander angeordnet. Der Spalt 14 ist von einem Magnetfeld durchdrungen. Die Polschuhe 10b, 10c können auf dem Magneten 10a aufsitzen oder seitlich daran anliegen.

Die Magnetanordnung 10 umfasst weiter einen zwischen den Polschuhen 10b und 10c beweglichen, flachen und magnetisch gut leitenden, etwa weichmagnetischen Anker 16 mit hoher magnetischer Permeabilität, der an seinem von der Magnetanordnung 10 abgewandten Ende an einem Gelenkzapfen 17 angelenkt ist, welcher wiederum exzentrisch zur Achse bzw. Welle 4 auf dem mit dieser und Arm 1 beweglichen Rad 3 befestigt ist.

Der weichmagnetische Anker 16 kann in den Spalt 14 eintreten und zumindest teilweise aus diesem herausgezogen werden; dabei ist der Abstand zwischen Spalt 14 und Anker 16 aus Gründen der Darstellung übertrieben gezeichnet. In der Praxis wird die Breite des Spaltes 14 der Breite des Ankers 16 eng angenähert. Um Reibung beim Eintauchen des Ankers 16 in den Spalt 14 zu verringern, ist auf dem Anker 16 eine Gleitbeschichtung 18a aufgebracht, und auf den dem Anker 16 zugewandten Spaltwänden 19 sind ebenfalls Gleitbeschichtungen 18b vorgesehen.

Alternativ können anstelle von Gleitbeschichtungen 18a, 18b auch andere reibungsverringernde Massnahmen vorgesehen werden, wie etwa Kugel- oder Walzlager, die auf wahlweise dem Anker 16 oder den diesem zugewandten Spaltwänden angeordnet werden können.

Die Vorrichtung wirkt wie folgt. Im Betrieb wird der Arm 1 mit dem Werkzeug 6 aus der dargestellten Ruhestellung zu einem zu bearbeitenden Teil unter Drehung der Welle 4 (in Fig. 1 im Uhrzeigersinn) hin bewegt. Durch die Auslenkung des Armes 1 nach vorne kommt der Arm 1 aus dem Gleichgewicht und strebt dazu, um die Welle 4 nach unten zu kippen.

Die bei der Armauslenkung erfolgte Drehung des Rades bewegt auch den am Rad 3 befestigten Gelenkzapfen 17 (in Fig. 1 im Uhrzeigersinn) nach oben und dreht dadurch den Kippmomentkompensierer 8 als Einheit um den an der Basis 2 vorgesehenen Gelenkzapfen 13. Da dies den Abstand zwischen den beiden Gelenkzapfen 13 und 17 erhöht, wird der an Rad 3 exzentrisch angelenkte Anker 16 teilweise aus dem Spalt 14 gezogen.

Der Anker 16 hat nun das Bestreben, erneut in eine Stellung zu gelangen, in welcher er den felderfüllten Raum zwischen den Polschuhen 10b und 10c wieder weitgehend ausfüllt, da dies den magnetischen Kreis schliesst und so den magnetischen Fluss zwischen den Polschuhen 10b und 10c maximiert. Es wirkt daher eine Kraft längs der Linie zwischen beiden Gelenkzapfen 17 und 13 auf den Anker 16, die diesen in den Spalt 14 zurückzieht. Diese Kraft wird über den Gelenkzapfen 17 auf das Rad 3 übertragen und übt ein Drehmoment aus (in Fig. 1 im Gegenuhrzeigersinn), das dem Kippen des Armes entgegenwirkt. Die Kippmoment-Kompensationseinheit 9 der vorliegenden Erfindung basiert damit auf der Ausnutzung des magnetischen Reluktanzprinzips, also dem Bestreben des im Magnetfeld befindlichen Armes, eine Stellung einzunehmen, die maximalen magnetischen Fluss ergibt, also einen möglichst grossen Teil des felderfüllten Raumes auszufüllen, gegebenenfalls im Bereich grösster Felddichte, und damit den magnetischen Widerstand im Magnetkreis zu minimieren.

Mit der obigen Anordnung ist eine vollständige und genaue Kompensation des Kippmomentes erzielbar. Eine genaue Kompensation des Kippmomentes ist jedoch nicht zwingend erforderlich. Vielmehr ist auch eine gewisse Über- oder Unterkompensation möglich; insbesondere ist es möglich, nur einen Teil des Kippmomentes wie beschrieben magnetostatisch zu kompensieren und ergänzend andere Massnahmen zur Verhinderung weiteren Kippens vorzusehen.

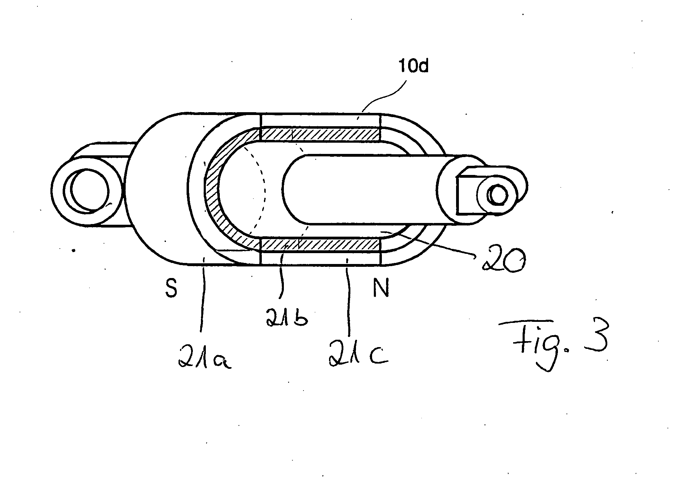

Anstelle der gezeigten planaren Magnetanordnung 10 sind auch andere Geometrien denkbar. So ist es möglich, eine Magnetanordnung in Form eines Hohlzylinders 20 wie in Fig. 3 gezeigt zu wählen. Entsprechende Teile sind darin mit gleichen Bezugszeichen versehen wie in den vorangegangen Zeichnungen. In diesem Fall wird die Magnetanordnung 10 hohlzylindrisch gebildet und der an den dem Spalt entsprechenden Zylinder-Hohlraum 14 eng angepasste Anker 16 mit geringem magnetischen Widerstand, der vorzugsweise auch bei dieser Ausführungsform aus weichmagnetischem Material gebildet wird, tritt in den Zylinder-Hohlraum 14 ein. Um einen permanentmagnetischen Hohlzylinder 20 herum ist eine Magnetspule 10d angeordnet. Die Magnetisierung des Hohlzylinders 20 ist dabei so gewählt, dass am offenen Ende des Hohlzylinders 20 der eine Magnetpol (in der Figur willkürlich der Südpol) liegt und am entgegengesetzten, vom Anker abgewandten Ende des Hohlzylinders 20 der entgegengesetzte Magnetpol.

Die in Fig. 3 gezeigte Anordnung weist dabei als Besonderheit einen modular aufgebauten Hohlzylinder 20 auf, wie durch Modultrennlinien veranschaulicht ist. In der modular aufgebauten Magnetanordnung sind mehrere Module 21a, 21b, 21c unterschiedlicher Länge und mit unterschiedlich starker Magnetisierung zusammen zu einer Baueinheit verbunden.

Im Betrieb führt diese Anordnung dazu, dass die auf den Anker 16 ausgeübte Rückstellkraft mit der Auslenkung aus der Ruhelage auf durch die Modulwahl festlegbare Weise variiert. So kann ein gewünschter Verlauf der den Arm 1 rückstellenden Kraft, d.h. ein gewünschter Kraft-Weg-Verlauf einfach erzielt oder zumindest approximiert werden. Einleuchtenderweise ist es auch möglich, die Magnetanordnung aus nur gleichen Modulen 21 zusammenzustellen, etwa wenn lediglich Drehmomentkompensiereinheiten für unterschiedliche Roboterarme mit unterschiedlichem maximalen Hub geschaffen werden sollen.

Es ist ohne weiteres möglich ist, die Magnetspule 10d mit einem Konstantstrom zu speisen, um das Permanentmagnetfeld insbesondere zum Zurückziehen des Roboterarmes in die Ruhestellung zu verstärken oder das Feld abzuschwächen, wenn die Antriebsmotoren während des Arbeitszyklus geringer belastet werden und nicht gegen die Rückstellkraft arbeiten sollen.

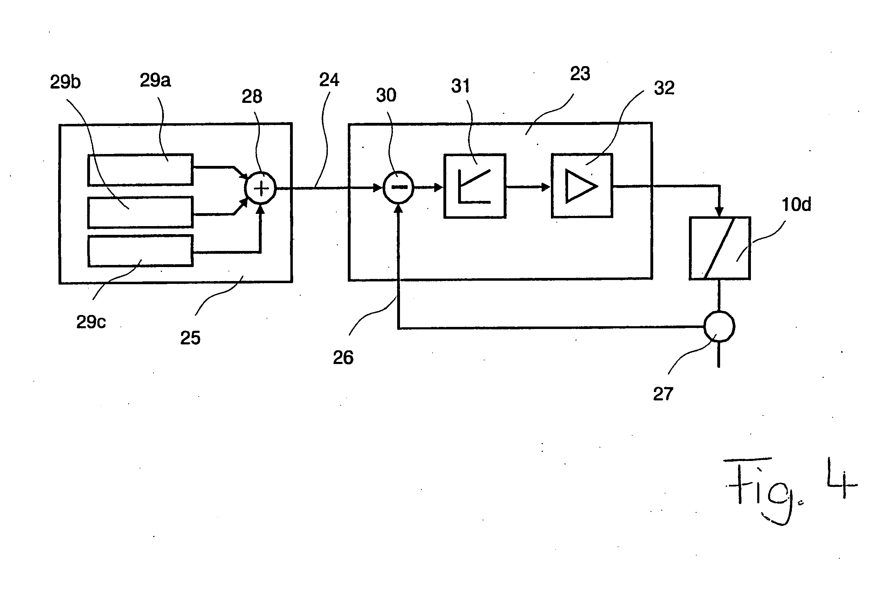

Nach der Erfindung ist auch eine Stromsteuerung vorgesehen, die nach der Prinzipskizze von Fig. 4 ausgelegt sein kann. Nach Fig. 4 wird an den Elektromagneten 10d ein Erregungsstrom aus einer Stromregelstufe 23 gespeist, die ein für ein Sollstromsignal repräsentatives Eingangssignal 24 aus einer Sollstromberechnungsstufe 25 sowie vorzugweise ein Iststromsignal 26 von einem der Spule zugeordneten Stromsensor 27 erhält.

In der Sollstromberechnungsstufe 25 wird der Sollstrom in einer angedeuteten Verknüpfungsstufe 28 unter Berücksichtigung der Ausgaben einer Konstantstromvorgabestufe 29a, einer Lastkomponentenvorgabestufe 29b und einer Positionsangabestufe 29c zur Erzielung eines gewünschten Kraft-Weg-Verlaufs bestimmt. Die Lastkomponentenvorgabe kann wiederum insbesondere die Roboterarm-Dimensionierung, das am Arm angebrachte Werkzeug 6 und gegebenfalls eine damit in einer jeweiligen Arbeitsphase gehaltene Werkstücklast berücksichtigen. Die Verknüpfungsstufe 28 kann zusammen mit den Einheiten 29a, 29b und 29c einen Teil einer numerischen Roboterarmsteuerung bilden.

Die Stromregelstufe weist eine Differenzstufe 30 auf, die die Differenz aus der von Stufe 25 ausgegebenen Sollstromvorgabe und dem mit Sensor 27 erfassten Istwert bildet und an einen Stromregler 31 ausgibt, welcher wiederum das Eingangssignal für die Leistungsausgangsstufe 32 bereitstellt. Die Leistungsausgangsstufe 32 versorgt die Spule 10d mit Erregerstrom.

Obwohl sich die Erregerströme während eines Arbeitszyklus bei dieser Beschaltung ändern können, so dass sich entsprechend auch die Stärken der von den Spulen erzeugten Magnetfelder ändern, verlaufen diese zeitlichen Variationen im Vergleich zur Bewegung des Roboterarmes langsam und die Magnetanordnung wirkt erfindungsgemäss zumindest quasistatisch, so dass auch hier eine magnetostatische Wirkung unter Ausnutzung des Reluktanzprinzips gegeben ist.

Während die Magnetspulen 10d als elektrisch durchgehende Bauelemente gezeigt sind, ist es auch möglich, mehrere Einzelspulen nebeneinander vorzusehen; in diesem Fall können an jeweilige Einzelspulen ohne weiteres unterschiedliche konstante und/oder variierende Ströme gespeist werden. Es ist insbesondere bei Hohlzylindern auch möglich, stets nur einen Teil der Spulen bei jenen Positionen anzuregen, in welche der Anker gezogen werden soll. Weiter kann eine räumliche Variation der Stärke des Magnetfeldes länge des Hohlzylinders auch durch Variation der Wicklungsdichte pro Längeneinheit erreicht werden.

Anstelle der vorbeschriebenen Anordnung mit einem linear in einem Luftspalt hin- und herbewegbaren Anker ist es ohne weiteres möglich, auch eine Anordnung mit Drehanker zu verwenden. Dies ist insbesondere dann sinnvoll, wenn der Rotationsfreiheitsgrad, für welchen die Drehmoment-Kompensationseinheit wirkt, kein Schwenkfreiheitsgrad, sondern ein Drehfreiheitsgrad ist, also wenigstens eine volle Drehung um die Achse ermöglicht.

Die Drehmoment-Kompensationseinheit kann aus einer einzigen oder aus mehreren, insbesondere zwei symmetrisch auf beiden Seiten des Armes angeordneten Kompensationseinheiten bestehen.

Die erfindungsgemässe Kompensationseinheit kann von den Anschlussmassen her zu herkömmlichen Anordnungen kompatibel gestaltet werden.

Ein besonderer Kraftverlauf ist zudem möglich, indem der Anker auf entsprechende Weise dimensioniert oder ausgestaltet wird, etwa durch das Vorsehen von Bohrungen, Ausnehmungen oder den Aufbau aus Materialien mit unterschiedlicher, vorzugsweise aber stets hoher magnetischer Permeabilität.

Die Kompenssationseinheit ist nicht auf ihren Einsatz zwischen Basis und Arm beschränkt, sondern kann auch zwischen zwei Armteilen eingesetzt werden, von welchen das proximale wiederum über ein oder mehrere Gelenke an der Basis angelenkt ist.

## Patentansprüche

1. Roboter mit mindestens einem um eine Schwenkachse schwenkbaren Roboterarm und mit einem das Drehmoment des Roboterarms um diese Schwenkachse kompensierenden Drehmomentkompensierer, wobei der Drehmomentkompensierer eine vom Antrieb des Roboterarms verschiedene magnetische Kompensationseinheit (9) aufweist und eine Erregerstrom-Steuerung (23) die einen Elektromagneten (10d) aufweisende magnetische Kompensationseinheit (9) in Abhängigkeit von wenigstens einer aus Achsstellung um die Schwenkachse Nutzlast und Dimensionierung des Roboterarms ausgewählten Größe mit Strom beaufschlagt.

2. Roboter nach Anspruch 1, **dadurch gekennzeichnet, dass** die magnetische Kompensationseinheit neben dem Elektromagneten (10d) (9) mit Polschuhen (10a, 10b) versehen ist.

3. Roboter nach einem der vorhergehenden Ansprüche, **dadurch gekennzeichnet, dass** die magnetische Kompensätionseinheit (9) mehrere Einzelmagnet-Module (21) umfaßt.

4. Roboter nach einem der vorhergehenden Ansprüche, **dadurch gekennzeichnet, dass** die magnetische Kompensationseinheit (9) neben dem Elektromagneten (10d) zumindest einen Permanentmagneten (10a), insbesondere einen Seltene-Erde-Magnet oder einen Ferrit-Magneten aufweist.

5. Roboter nach einem der Ansprüche 1 bis 4, **dadurch gekennzeichnet, dass** der Elektromagnet (10d) eine über seine Ausdehnung variierende Windungsdichte aufweist.

6. Roboter nach einem der Ansprüche 1 bis 5, **dadurch gekennzeichnet, dass** der Elektromagnet (10d) mehrere voneinander unabhängige Wicklungen aufweist.

7. Roboter nach einem der Ansprüche 1 bis 6, **gekennzeichnet durch** eine Erregerstrom-Steuerung, die neben der variierenden Stromspeirung eine Konstantstromspeisung vorsieht.

8. Roboter nach einem der vorhergehenden Ansprüche, **dadurch gekennzeichnet, dass** der Abstand zwischen einem Anker (16) und einer Spaltwandung (19) im Vergleich zur Spaltbreite klein dimensioniert ist und vorzugsweise nicht mehr als 1/5 der Ankerbreite, insbesondere unter 1/10 der Ankerbreite beträgt.

9. Roboter nach einem der vorhergehenden Ansprüche, **dadurch gekennzeichnet, dass** ein Anker (16) oder eine Spaltwandung (19) reibungsvermindernd ausgestaltet ist.

10. Roboter nach Anspruch 9, **dadurch gekennzeichnet, dass** die Reibungsverminderung zwischen Anker (16) und Spaltwandung (19) eine Gleitbeschichtung (18) umfaßt.

11. Roboter nach einem der Ansprüche 9 oder 10, **dadurch gekennzeichnet, dass** die Reibungsverminderung zwischen Anker (16) und Spaltwandung (19) Wälz- und/oder Gleitlager an einem von Wandung und Anker (16) umfaßt.

12. Roboter nach einem vorhergehenden Ansprüche, **dadurch gekennzeichnet, dass** ein Rotationsfreiheitsgrad durch ein eine Schwenkbewegung ermöglichendes Gelenk (4) gegeben ist.

13. Roboter nach einem der vorhergehenden Ansprüche, **dadurch gekennzeichnet, dass** die Kompensationseinheit (9) für die Kompensation des durch das Armgewicht auf die Rotationsachse (4) ausgeübten Drehmomentes dimensioniert ist.

14. Roboter nach einem der vorhergehenden Ansprüche, **gekennzeichnet durch** eine Steuerung zum Vorsehen wenigstens eines elektromagnetischen Erregerstromes zur elektromagnetischen Kompensation nach den Reluktanzprinzip in Abhängigkeit von zumindest einer aus Armstellung, Nutzlast oder Armdimensionierung gewählten Größe.

15. Roboter nach Anspruch 14, **gekennzeichnet durch** geschlossene Strom-Regelschleife zur Einregelung der Sollkraft.

16. Roboter-Drehmomentkompensationseinheit, mit einer vom Antrieb eines um eine Schwenkachse schwenkbaren Roboterarms des Roboters verschiedene magnetische Kompensationseinheit und mit einer Steuerung, die eine einen Elektromagneten aufweisende magnetische Kompensationseinheit in Abhängigkeit von wenigstens einer aus Achsstellung um die Schwenkachse, Nutzlast und Dimensionierung des Roboterarms ausgewählten Größe mit Strom beaufschlagt.

17. Roboter-Drehmomentkompensationseinheit nach Anspruch 16, **gekennzeichnet durch** ein oder mehrere kennzeichnende Merkmale der Ansprüche 2 bis 15.

## Claims

1. A robot having at least one robot arm swivellable about a swivel axis and having a torque compensator compensating the torque of the robot arm about this swivel axis, the torque compensator comprising a magnetic compensation unit (9) other than the drive of the robot arm and an excitation current controller (23), which applies current to a magnetic compensation unit (9) comprising an electromagnet (10d) as a function of at least one variable selected from axial position about the swivel axis, payload and size of the robot arm.

2. A robot according to claim 1, **characterised in that** the magnetic compensation unit (9) is provided, in addition to the electromagnet (10d), with pole pieces (10a, 10b) .

3. A robot according to one of the preceding claims, **characterised in that** the magnetic compensation unit (9) comprises a plurality of individual magnet modules (21).

4. A robot according to one of the preceding claims, **characterised in that** the magnetic compensation unit (9) comprises, in addition to the electromagnet (10d), at least one permanent magnet (10a), in particular a rare earth magnet or a ferrite magnet.

5. A robot according to one of claims 1 to 4,
**characterised in that** the electromagnet (10d) comprises a turn density which varies over the extent thereof.

6. A robot according to one of claims 1 to 5,
**characterised in that** the electromagnet (10d) comprises a plurality of mutually independent windings.

7. A robot according to one of claims 1 to 6,
**characterised by** an excitation current controller, which provides a constant current supply in addition to the varying current supply.

8. A robot according to one of the preceding claims, **characterised in that** the distance between an armature (16) and a gap wall (19) is small in comparison to the gap width and amounts preferably to no more than 1/5 of the armature width, in particular to under 1/10 of the armature width.

9. A robot according to one of the preceding claims, **characterised in that** an armature (16) or a gap wall (19) is designed to reduce friction.

10. A robot according to claim 9, **characterised in that** the friction reduction between armature (16) and gap wall (19) comprises an antifriction coating (18).

11. A robot according to one of claims 9 or 10, **characterised in that** the friction reduction between armature (16) and gap wall (19) comprises rolling and/or plain bearings on one of the wall and the armature (16).

12. A robot according to one of the preceding claims, **characterised in that** one rotational degree of freedom is provided by a joint (4) allowing swivelling motion.

13. A robot according to one of the preceding claims, **characterised in that** the compensation unit (9) is dimensioned for compensation of the torque exerted by the arm weight on the rotational axis (4).

14. A robot according to one of the preceding claims, **characterised by** a controller for providing at least one electromagnetic excitation current for electromagnetic compensation according to the reluctance principle as a function of at least one variable selected from arm position, payload or arm size.

15. A robot according to claim 14, **characterised by** a closed current regulation loop for adjusting the nominal force.

16. A robot torque compensation unit, having a magnetic compensation unit other than the drive of an arm of the robot swivellable about a swivel axis and having a controller, which applies current to a magnetic compensation unit comprising an electromagnet as a function of at least one variable selected from axial position about the swivel axis, payload and size of the robot arm.

17. A robot torque compensation unit according to claim 16, **characterised by** one or more characterising features of claims 2 to 15.

## Revendications

1. Robot avec au moins un bras pivotant autour d'un axe de pivotement et avec un compensateur de couple compensant le couple de rotation du bras du robot autour dudit axe de pivotement, le compensateur de couple présentant une unité de compensation (9) magnétique différente de l'entraînement du bras du robot et une régulation du courant d'excitation (23), laquelle sollicite par du courant électrique une unité de compensation magnétique (9) présentant un électroaimant (10d) en fonction d'au moins une grandeur choisie parmi la position de l'axe autour de l'axe de pivotement, la charge utile et le dimensionnement du bras du robot.

2. Robot selon la revendication 1, **caractérisé en ce que** l'unité de compensation magnétique (9) est munie, outre l'électroaimant (10d) d'épanouissements polaires (10a, 10b).

3. Robot selon une des revendications qui précédent, **caractérisé en ce que** l'unité de compensation magnétique (9) comprend plusieurs modules magnétiques individuels (21).

4. Robot selon une des revendications qui précèdent, **caractérisé en ce que** l'unité de compensation magnétique (9) présente, outre l'électroaimant (10d) au moins un aimant permanent (10a), et singulièrement un aimant de terres rares ou un aimant ferrimagnétique.

5. Robot selon une des revendications 1 à 4, **caractérisé en ce que** l'électroaimant (10d) présente une densité d'enroulement variant suivant son expansion.

6. Robot selon une des revendications 1 à 5, **caractérisé en ce que** l'électroaimant (10d) présente plusieurs enroulements indépendants l'un de l'autre.

7. Robot selon une des revendications 1 à 6, **caractérisé par** une régulation du courant d'excitation qui prévoit une alimentation en courant constant en plus du courant variable.

8. Robot selon une des revendications qui précédent, **caractérisé en ce que** la distance entre un induit (16) et une paroi d'entrefer (19) soit faiblement dimensionnée comparé à la largeur de l'entrefer et ne soit de préférence pas plus de 1/5 de la largeur de l'induit, et notamment inférieure au 1/10 de la largeur de l'induit.

9. Robot selon une des revendications qui précédent, **caractérisé en ce qu'**un induit (16) ou une paroi d'entrefer (19) est formé(e) pour réduire les frottements.

10. Robot selon la revendication 9, **caractérisé en ce que** la réduction des frottements entre l'induit (16) et la paroi d'entrefer (19) comprend un revêtement glissant (18).

11. Robot selon une des revendications 9 ou 10, **caractérisé en ce que** la réduction des frottements entre l'induit (16) et la paroi d'entrefer (19) comprend des paliers à roulement et/ou lisses sur la paroi et sur l'induit (16).

12. Robot selon une des revendications qui précédent, **caractérisé en ce qu'**un degré de liberté de rotation est octroyé par une articulation (4) permettant un mouvement tournant.

13. Robot selon une des revendications qui précèdent, **caractérisé en ce que** l'unité de compensation (9) est dimensionnée pour compenser le couple exercé sur l'axe de rotation (4) par le poids du bras.

14. Robot selon une des revendications qui précèdent, **caractérisé par** une régulation pour prévoir au moins un courant d'excitation électromagnétique pour la compensation électromagnétique suivant le principe de la réluctance en fonction d'au moins une grandeur choisie parmi la position du bras, la charge utile ou le dimensionnement du bras.

15. Robot selon la revendication 14, **caractérisé par** une boucle de régulation électrique fermée pour réguler la force consigne.

16. Unité de compensation du couple d'un robot, avec une unité de compensation magnétique différente de l'entraînement d'un bras du robot pivotant autour d'un axe de rotation et avec une régulation qui sollicite par du courant électrique une unité de compensation magnétique présentant un électroaimant en fonction d'au moins une grandeur choisie parmi la position de l'axe autour de l'axe de rotation, la charge utile et le dimensionnement du bras du robot.

17. Unité de compensation du couple d'un robot selon la revendication 16, **caractérisé par** une ou plusieurs des caractéristiques particulières selon les revendications 2 à 15.
